# EUROPÄISCHE PATENTSCHRIFT

(11) **EP 4 198 460 B1**
(45) Veröffentlichungstag und Bekanntmachung des Hinweises auf die Patenterteilung: **02.04.2025**
(21) Anmeldenummer: 22210446.5
(22) Anmeldetag: 30.11.2022
(51) Int. Cl.: G01D 11/24

(54) **SENSORGEHÄUSE**
SENSOR HOUSING
BOÎTIER DE CAPTEUR

(30) Priorität: 17.12.2021 DE 102021133583
(43) Veröffentlichungstag der Anmeldung: 21.06.2023
(73) Patentinhaber: Fujin Beteiligungsgesellschaft mbH, 85640 Putzbrunn (DE)
(72) Erfinder: Tubbesing, Roland, 81739 München (DE)
(74) Vertreter: Reinhardt, Markus

(56) Entgegenhaltungen:
- WO-A1-2020/144081
- DE-U1- 29 819 102

## Beschreibung

Die vorliegende Erfindung betrifft ein neuartiges Sensorgehäuse für die Montage in einer Begrenzungswand eines Self-Storage-Abteils bzw. einer Self-Storage-Box.

Herkömmliche Self-Storage-Anlagen umfassen in einem Gebäude bzw. in einem Freigelände eine Vielzahl von solchen Self-Storage-Abteilen bzw- Self-Storage-Boxen. Die Größe der Self-Storage-Abteile bzw. -Boxen variiert dabei von kleinen kubusförmigen Boxen, die z.B. die Größe 30cm x 30cm x 30cm aufweisen und eine kleine Türe haben bis hin zu Abteilen, die mehrere Kubikmeter an Raumvolumen aufweisen und große Türen bzw. Tore als Eingang aufweisen.

Das Dokument DE 298 19 102 U1 beschreibt einen Infrarot-Bewegungsmelder, der mittels eines Scharniergelenks schwenkbar mit einem Koppelbaustein verbunden ist, welcher zum Einbau in eine Installationsdose vorgesehen ist.

Im Bereich Automatisierung einer solchen Self-Storage-Anlage gibt es praktisch keine technischen Hilfsmittel. Im Zuge der bekannten Covid-19-Pandemie hat sich der Wunsch nach Automatisierung des Betreibens einer Self-Storage-Anlage manifestiert, so dass die Anlage im Wesentlichen ohne Personal betrieben werden kann.

Die Aufgabe der vorliegenden Erfindung ist es daher, eine Vorrichtung zu schaffen, die als Grundlage für die Automatisierung, Datensammlung, Optimierung und Risikoerkennung des Betreibens der Self-Storage-Anlage dient. Dabei werden sowohl dem Betreiber als auch den Kunden der Self-Storage-Anlage Funktionen und Sicherheiten ermöglicht, die bisher in diesem Bereich unbekannt sind. Ein Personaleinsatz während des Betriebs der Self-Storage-Anlage wird auf ein Minimum begrenzt. Direkte und indirekte Mitarbeiter (z.B. für Reinigung, Sicherheitsdienst, Wartung) der Self-Storage-Anlage werden reduziert.

Die Erfindung weist zur Lösung dieser Aufgabe die im Anspruch 1 angegebenen Merkmale auf. Vorteilhafte Ausgestaltungen hiervon sind in den weiteren Unteransprüchen angegeben.

Das erfindungsgemäße Sensorgehäuse ist für die Montage in einer Begrenzungswand eines Self-Storageabteils bzw. einer Self-Storage-Box von ausserhalb bzw. gangseitig des Self-Storageabteils bzw. der Self-Storage-Box vorgesehen, wobei das Sensor-Gehäuse im Wesentlichen zweiteilig ausgebildet ist, wobei diese beiden Gehäuseteile scharnierartig mit- und zueinander verschwenkbar verbunden sind, wobei am gangseitigen Gehäuseteil ein umlaufender Flansch vorgesehen ist, der im umlaufenden Rand mehrere Montageöffnungen hat, wobei eine Mehrzahl von elektrischen Anschlüssen, die im gangseitigen Gehäuseteil derart angeordnet sind, dass diese im Abdeckungsbereich der Begrenzungswand nach der Montage liegen, wobei einer oder eine Mehrzahl von Sensoren und Leuchtmitteln vorgesehen ist, die am abteilseitigen bzw. boxseitigen Gehäuseteil angeordnet sind und/oder am gangseitigen Gehäuseteil angeordnet sind.

Durch die Möglichkeit das Sensorgehäuse von außerhalb des Self-Storage-Abteils montieren zu können, ist ein Betreten des Self-Storage-Abteils nicht erforderlich, so dass eine Zustimmung des Kunden nicht erforderlich ist, sofern das entsprechende Self-Storage-Abteil vermietet ist. Mit einer einzigen Montagetätigkeit zum Anbringen des erfindungsgemäßen Sensorgehäuses 1 an der Begrenzungswand eines Self-Storage-Abteils wird eine Vielzahl von Funktionen für die Kunden und den Betreiber ermöglicht, die bisher in diesem Bereich nicht bekannt sind.

Nach Anspruch 2 ist zwischen den beiden Gehäuseteilen ein Scharnier derart vorgesehen, dass die beiden Gehäuseteile in festgelegten Winkelschritten um eine Achse zueinander verschwenkbar sind und dass das Scharnier selbstarretierend ist. Damit lassen sich die Sensoren und Leuchtmittel einfach und exakt auf die Größe bzw. das Volumen des Self-Storage-Abteils justieren.

Nach Anspruch 3 ist zwischen den beiden Gehäuseteilen eine elektrische Verbindung vorgesehen, die in Form eines Flachbandkabels ausgebildet ist. Da die beiden Gehäuseteile des Sensorgehäuses zueinander verschwenkbar sind, kann eine flexible und zuverlässige, aber dennoch einfache elektrische Verbindung hergestellt werden.

Nach Anspruch 4 ist an beiden Gehäuseteilen jeweils eine Mehrzahl von Lüftungsschlitzen bzw. Lüftungsöffnungen vorgesehen. Sollte es aufgrund der Erwärmung von Sensoren, Leuchtmitteln oder anderen in dem Sensorgehäuse eingebauten elektronischen Bauteilen zu einem Anstieg der Temperatur kommen, kann die Wärme durch die Lüftungsschlitze bzw. -öffnungen abgeleitet werden.

Nach Anspruch 5 ist zumindest ein Sensor in Form einer Videokamera ausgebildet. Für diverse Funktionen, die weiter unten noch beschrieben werden, ist der Einsatz einer Videokamera zur Gesichtserkennung oder Bewegungserkennung von Vorteil.

Nach Anspruch 6 ist zumindest ein Sensor in Form eines Mikrofones ausgebildet. Mit Hilfe eines Mikrofons lassen sich weitere vorteilhafte Funktionen erreichen, wie etwa die Identifizierung und Lokalisierung von Ungeziefer in der Self-Storage-Anlage.

Nach Anspruch 7 ist zumindest ein Sensor in Form eines Temperaturmessers ausgebildet. Aus Brandschutz- oder Versicherungsgründen kann die Erfassung der Temperatur im Self-Storage-Abteil und auch in den Gängen erforderlich sein.

Nach Anspruch 8 ist zumindest ein Sensor in Form eines Gasdetektors ausgebildet. Um gefährliche Güter, die nicht in der Self-Storage-Anlage eingelagert werden dürfen, zu erkennen, ist der Einsatz diverser Gasdetektoren möglich.

Nach Anspruch 9 ist zumindest ein Leuchtmittel in Form von LEDs ausgebildet. Um Energie einzusparen, werden vorzugsweise LEDs eingesetzt. Diese können auch unterschiedliche Farben an Licht erzeugen, so dass ein Kundenleitsystem innerhalb der Self-Storage-Anlage realisierbar ist.

Nach Anspruch 10 sind das Sensorgehäuse und/oder die Gehäuseteile im Wesentlichen quaderförmig ausgebildet. Für eine kostengünstige Herstellung des erfindungsgemäßen Sensorgehäuses hat sich eine quaderförmige Grundform herausgestellt.

Nach Anspruch 11 weisen die beiden Gehäuseteile jeweils einen Deckel auf, der mit einem Grundkörper des Gehäuseteils verschraubt ist. Zu Wartungszwecken und auch für die (nachträgliche) Bestückung des Sensorgehäuses mit Sensoren und/oder Leuchtmitteln und/oder weiteren elektronischen Bauteilen können die beiden Gehäuseteile aufgeschraubt werden und sehr einfach aus- bzw. nachgerüstet werden.

Nach Anspruch 12 ist der Schwenkwinkel zwischen den beiden Gehäuseteilen je nach Größe des Self-Storage-Abteils bzw. der Self-Storage-Box einstellbar. Da die Vielzahl an Self-Storage-Abteilen in der Self-Storage-Anlage in der Regel unterschiedliche Größen und Volumen aufweisen, kann die Ausrichtung der Erfassungskegel der Sensoren bzw. die Ausleuchtung durch die Leuchtmittel optimiert werden. Eine weitere Optimierung des Erfassungsbereichs des Sensors läßt sich erreichen, indem eine transluzente Abdeckkappe des Sensors verdreht wird oder ausgetauscht wird, um beispielsweise die optische Brechung im Hinblick auf zu erfassende Umgebungsparameter einzustellen.

Nach Anspruch 13 ist das Sensorgehäuse mittels Schrauben an der Begrenzungswand nach der Montage festgeschraubt. Um die Montage des Sensorgehäuses möglichst einfach zu gestalten, ist die Schraubbefestigung vorgesehen.

Nach Anspruch 14 ist im Sensorgehäuse zumindest ein Lautsprecher vorgesehen. Über einen oder mehrere Lautsprecher können beispielsweise Anweisungen oder auch Alarme an die Kunden übermittelt werden. Auch die gezielte Einspielung von Musik oder Werbung ist denkbar. Zudem die Übermittlung von Instruktionen an Kunden oder die Kommunikation mit dem Betreiber bzw. einem Personal der Self-Storage-Anlage.

Nach Anspruch 15 ist zumindest ein Sensor als Luftfeuchtemesser ausgebildet. Wie andere Sensoren für Parameter der Umgebung kann ein Luftfeuchtemesser vorgesehen werden, um frühzeitig eine Abweichung vom optimalen Raumklima innerhalb der Self-Storage-Anlage oder einem Self-Storage-Abteil zu erfassen.

Die vorstehende Aufgabe, die Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

Die Erfindung wird im folgenden anhand der Zeichnungen näher erläutert. Diese zeigen in:
Fig. 1 eine schematische Seitenansicht des Sensorgehäuses in Blickrichtung einer Achse A;
Fig. 2 eine schematische Draufsicht auf das Sensorgehäuse aus Richtung eines Self-Storage-Abteils bzw. eines Pfeils in der Figur 3;
Fig. 3 eine schematische Ansicht eines Bodens des Sensorgehäuses, wobei eine Mehrzahl von elektrischen Anschlüssen dargestellt ist;
Fig. 4 eine perspektivische Ansicht des erfindungsgemäßen Sensorgehäuses;
Fig. 5 eine Seitenansicht des nicht aufgeklappten Sensorgehäuses nach der Figur 4;
Fig. 6 eine weitere Seitenansicht von der diametral gegenüberliegenden Seite wie nach der Figur 5;
Fig. 7 eine Ansicht von oben auf das nicht aufgeklappte Sensorgehäuse nach der Figur 4;
Fig. 8 eine Ansicht von unten auf das nicht aufgeklappte Sensorgehäuse nach der Figur 4;
Fig. 9 eine Draufsicht auf die Frontseite des Sensorgehäuses nach der Figur 4; und
Fig. 10 eine Draufsicht auf die Rückseite des Sensorgehäuses nach der Figur 4.

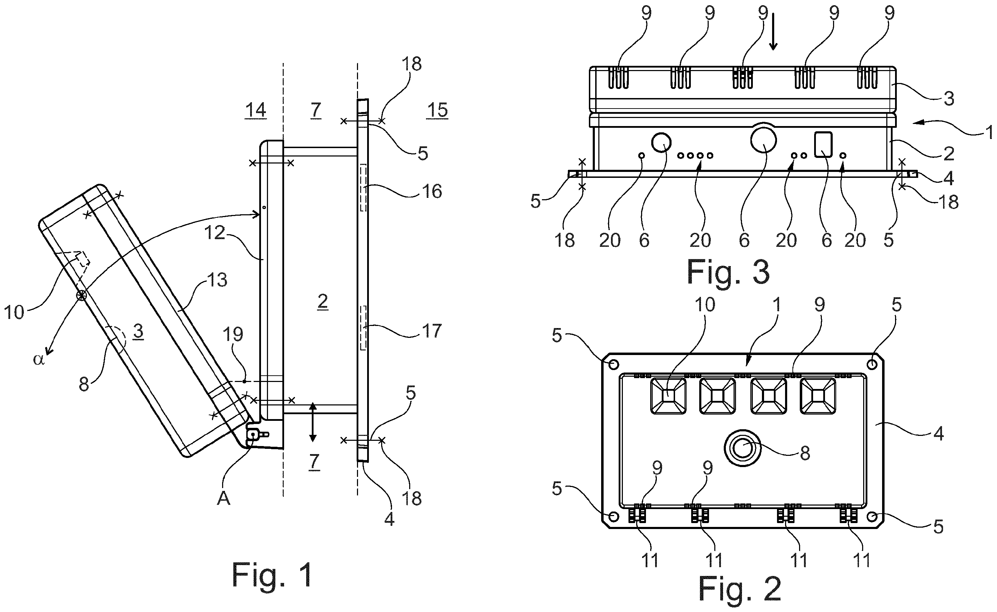

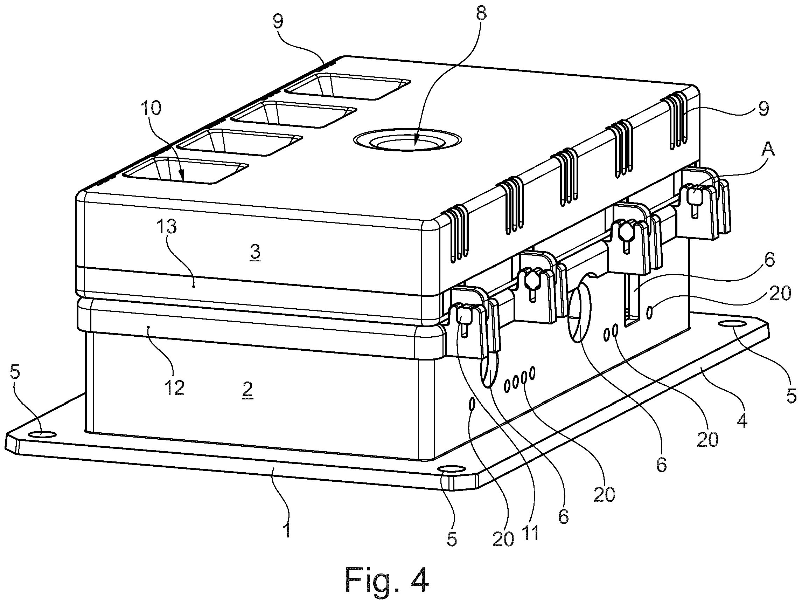

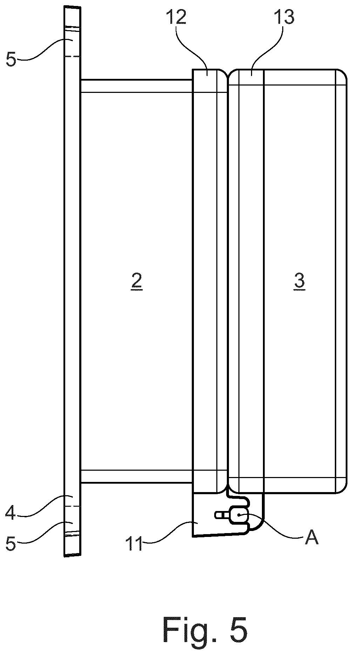

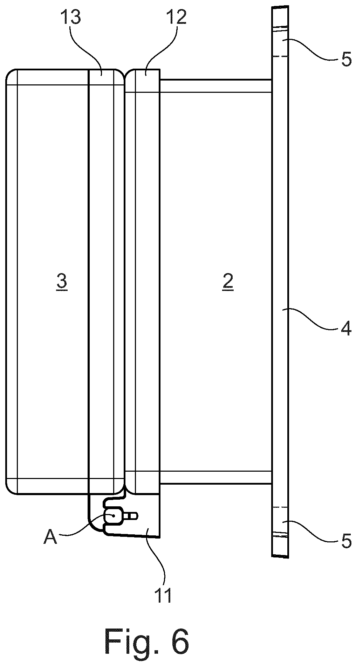

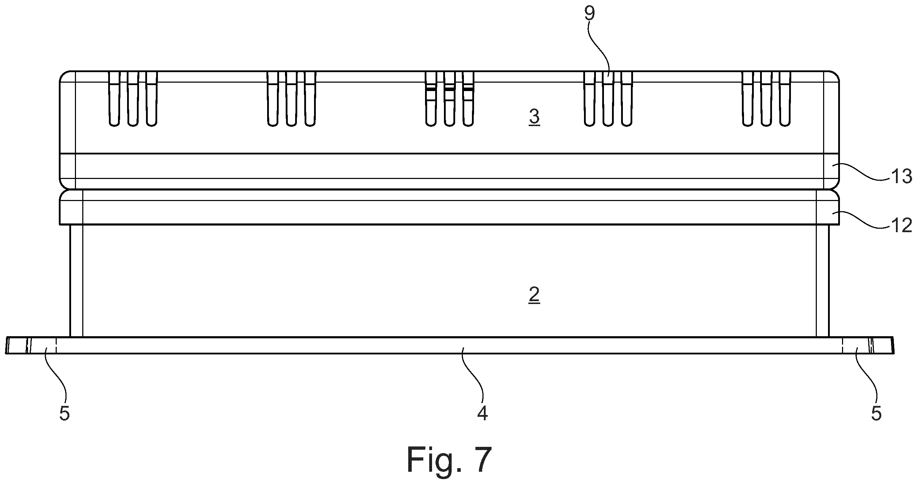

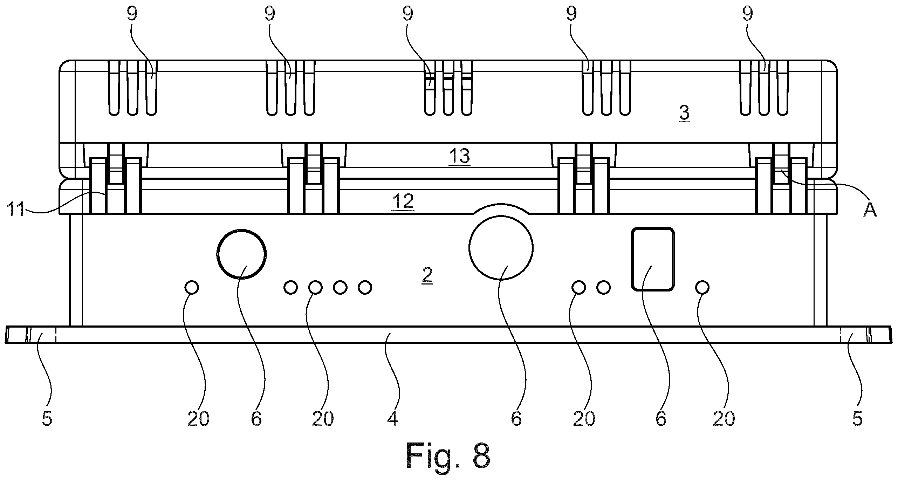

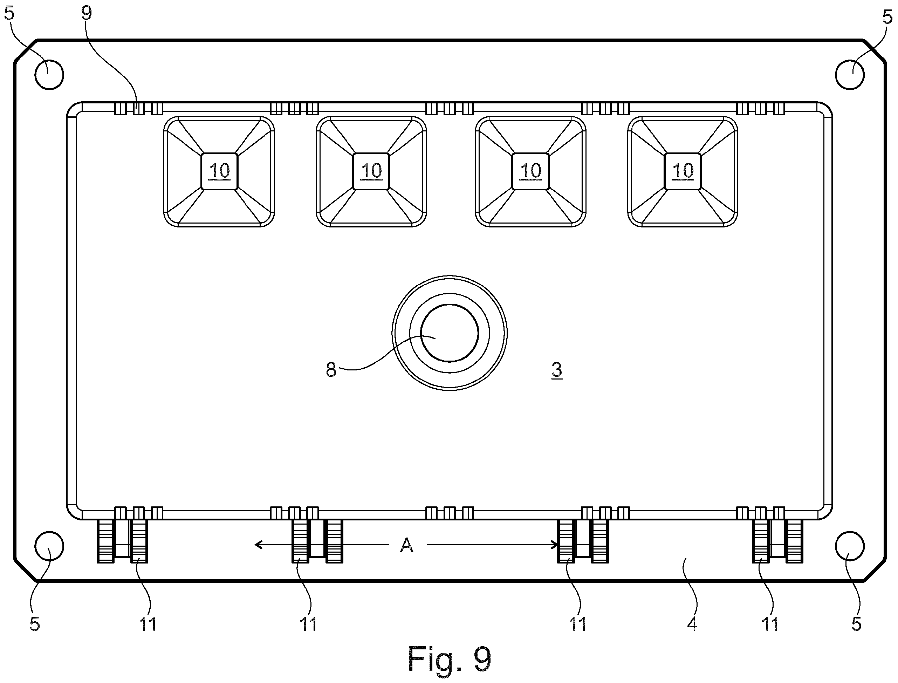

Das erfindungsgemäße Sensorgehäuse 1 umfasst gemäß einer ersten Ausführungsform nach den Figuren 1 bis 10 zwei Gehäuseteile 2 und 3, die zueinander um eine Achse A (verläuft senkrecht zur Zeichnungsebene der Figur 1) verschwenkbar sind. In der schematischen Seitenansicht der Figur 1 ist eine Begrenzungswand 7 eines Self-Storage-Abteils 14 bzw. einer Self-Storage-Box durch Strichlinien dargestellt, in die das Sensorgehäuse 1 eingebaut bzw. montiert wird.

In der weiteren Beschreibung wird der Begriff "Self-Storage-Abteil" benutzt und umfasst damit auch Self-Storage-Boxen. Ebenso sind damit "Self-Storage-Räume" umfasst, die sich beispielsweise und ähnlich wie Garagen mit Rolltoren im Freien befinden. Abteilseitig ist dabei im Inneren des Self-Storage-Abteils, während "gangseitig" mit außerhalb des Self-Storage-Abteils definiert ist.

Um eine Automatisierung der gesamten Self-Storage-Anlage, die eine Vielzahl solcher Self-Storage-Abteile 14 aufweist, zu erreichen, benötigt es Hilfsmittel, die derzeit in aktuellen Self-Storage-Anlagen entweder gar nicht oder nicht in der hier beschriebenen Vollständigkeit eingesetzt werden.

Zwischen den beiden Gehäuseteilen 2 und 3 ist ein Scharnier 11 vorgesehen, welches entweder aus mehreren kurzen Scharnieren besteht, wie in der Figur 2 dargestellt oder welches durchgehend über die Breite des Sensorgehäuses 1 ausgebildet ist.

Das Scharnier 11 ist derart ausgebildet, dass die beiden Gehäuseteile 2 und 3 zueinander um einen Winkel α verschwenkbar sind, und zwar vorzugsweise in festgelegten Winkelabständen, wobei sich das Scharnier selbstarretiert, sofern keine Kraft mehr auf die Gehäuseteile 2 und 3 aufgebracht wird.

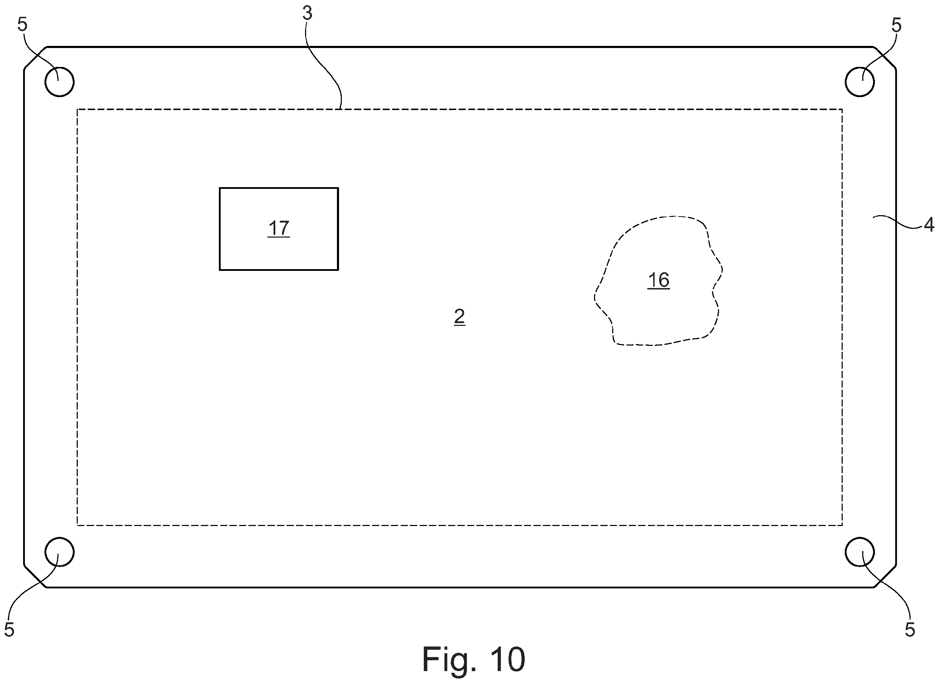

Jedes Gehäuseteil 2 und 3 weist einen Deckel 12 bzw. 13 auf. Der Deckel 12 und 13 ist jeweils mit dem Grundkörper des Gehäuseteils 2 und 3 verschraubt. Zwischen den beiden Gehäuseteilen 2 und 3 ist ein Flachbandkabel 19 vorgesehen, um die elektrische Verbindung herzustellen, nämlich für die in den beiden Gehäuseteilen 2 und 3 verbauten Sensoren 8, 16 und Leuchtmittel 10, 17. Die Sensoren 16 und die Leuchtmittel 17 sind dabei in der Figur 1 und 10 nur angedeutet.

In der Figur 3 ist zu sehen, dass am Boden des Sensorgehäuses 1, und zwar im Gehäuseteil 2, mehrer elektrische Anschlüsse 6 vorgesehen sind.

Bei der Montage des erfindungsgemäßen Sensorgehäuses 1 in einer Begrenzungswand 7 eines Self-Storage-Abteils 14 einer Self-Storage-Anlage wird das Sensorgehäuse 1 von außerhalb des Self-Storage-Abteils 14 eingebaut und mit der Begrenzungswand 7 vorzugsweise verschraubt. Dazu sind an einem Flansch 4 mehrere Montageöffnungen 5 am Rand vorgesehen, durch die Schrauben 18 in die Begrenzungswand 7 geschraubt werden. Anstatt Schrauben 18 läßt sich der Flansch 4 auch mittels bekannter Schnellverbindungen oder Befestigungsmitteln (Tannenbaumclips) fixieren. Ein Betreten des Self-Storage-Abteils 14 ist hierfür nicht erforderlich, so dass das erfindungsgemäße Sensorgehäuse 1 sogar während einer Vermietung des Self-Storage-Abteils 14 montiert werden kann.

In bzw. an der Begrenzungswand 7 vorgesehene elektrische Verbindungen (nicht explizit dargestellt, lediglich durch einen Doppelpfeil am Boden des Gehäuseteils 2 in der Figur 1 angedeutet), die beispielsweise in einem Kabelkanal zur Verfügung gestellt werden, werden über die Anschlüsse 6 mit dem Sensorgehäuse 1 verbunden. Hierzu sind entsprechende Steckverbindungen im Sensorgehäuse 1 eingebaut.

Die Begriffe "gangseitig" bzw. "außen" beziehen sich auf die Begrenzungswand 7 des Self-Storage-Abteils 14 und bedeuten, dass es die Seite eines Ganges 15 ist, der einem Kunden der Self-Storage-Anlage den Zugang zum angemieteten Self-Storage-Abteil 14 ermöglicht. Die Begriffe "abteilseitig" bzw. "innen" beziehen sich demnach auf das Innere des Self-Storage-Abteils 14.

Vor der Fixierung des Sensorgehäuses 1 durch die Schrauben 18 wird der Schwenkwinkel α zwischen den beiden Gehäuseteilen 2 und 3 manuell eingestellt, wobei der Schwenkwinkel α unter anderem von der Größe bzw. dem Raumvolumen des Self-Storage-Abteils 14 abhängt.

In dem Sensorgehäuse 1 kann eine Mehrzahl von Sensoren 8, 16 und Leuchtmitteln 10, 17 installiert sein, die je nach Auswahl durch den Betreiber der Self-Storage-Anlage variiert. In der bevorzugten Ausführungsform nach der Figur 2 ist eine Reihe von LEDs 10 in das Gehäuseteil 3 eingebaut, um bei Bedarf eine Ausleuchtung des Self-Storage-Abteils 14 zu erlauben. Ebenso ist ein Sensor 8 mittig in der Fläche des Gehäuseteils 3 vorgesehen, der zum Beispiel die Temperatur und/oder die Luftfeuchte im Self-Storage-Abteil 14 messen kann. Um die Tiefe von unterschiedlich großen Self-Storage-Abteilen 14 ausleuchten zu können bzw. die Messung durch den Sensor 8 durchzuführen, kann der Schwenkwinkel α optimiert und gezielt so eingestellt werden, dass etwa die Mitte des Raumes erreicht wird.

An beiden Gehäuseteilen 2 und 3 können eine Mehrzahl von Lüftungsschlitzen bzw. - öffnungen 9 vorgesehen sein.

Als Sensoren 8 und 16 sind beispielsweise eine Videokamera, ein Mikrofon, ein Temperaturmesser, ein Luftfeuchtemesser und/oder ein Gasdetektor vorgesehen.

Als Leuchtmittel 10 und 17 können vorzugsweise LEDs eingesetzt werden, um Energie gegenüber anderen Arten von Leuchtmitteln einzusparen.

Je nach Wunsch des Betreibers einer Self-Storage-Anlage können die Sensorgehäuse 1 vor der Montage in bzw. an der Begrenzungswand 7 eines jeden Self-Storage-Abteils 14 mit den erforderlichen Sensoren 8 und 16 bestückt werden. Ebenso können Leuchtmittel 10 und 17 vorgesehen werden oder gar ein Lautsprecher installiert werden.

Die vielfältigen Funktionen, die durch diese Ausstattung des Sensorgehäuses 1 dem Betreiber der Self-Storage-Analge zur Verfügung gestellt werden können, ermöglicht neue und bisher nicht bekannt Vorteile für den Kunden und eine Vollautomatisierung des Betreibens der Self-Storage-Anlage für den Betreiber.

Beispielsweise kann durch eine Videokamera als Sensor 8 bzw. 16 eine Überwachung des Ganges 15 der Self-Storage-Anlage und des Self-Storage-Abteils 14 stattfinden. Durch Methoden der Bildauswertung können unterschiedlichste Funktionen realisiert werden, u.a. eine Zutrittskontrolle mittels Gesichtserkennung, so dass der Kunde automatisch Zugang zum Self-Storage-Abteil 14 erhält, ohne das bisher übliche Schloß an einer Tür des Self-Storage-Abteils 14 bedienen zu müssen.

Durch Sensoren 8 bzw. 16, die die Umgebungsparameter, wie Temperatur oder Luftfeuchte messen, können ggf. Alarme ausgelöst werden, um dem Betreiber der Self-Storage-Anlage eine Warnung zu geben. Durch Gasdetektoren als Sensoren 8 und 16 lassen sich gefährliche Güter erfassen, die selbstverständlich nicht in einem Self-Storage-Abteil 14 eingelagert werden dürfen. Über Mikrofone als Sensoren 8 und 16 lassen sich Funktionen in der Self-Storage-Anlage verwirklichen, die bisher undenkbar erschienen. So kann beispielsweise über eine akkustische Auswertung der aufgezeichneten Geräusche im Self-Storage-Abteil 14 oder auch im Gang 15 Ungeziefer identifiziert werden und dem Betreiber gezielt mitgeteilt werden, wo sich das Ungeziefer zur Bekämpfung befindet.

Über eine Bewegungserkennung eines Kunden mittels der Videokameras in den Sensorgehäusen 1, der sich in den Gängen 15 der Self-Storage-Anlage bewegt, können gezielt gesteuert die Leuchtmittel 17 gangseitig der Self-Storage-Abteile 14 derart aktiviert werden, dass der Kunde zu seinem angemieteten Self-Storage-Abteil 14 optisch geleitet wird. Sobald der Kunde sein Self-Storage-Abteil 14 erreicht, kann das Leuchtmittel 10 im Inneren aktiviert werden und automatisch deaktiviert werden, wenn der Kunde das Self-Storage-Abteil 14 verläßt. Entriegelung und Verriegelung des angemieteten Self-Storage-Abteils 14 erfolgt dann automatisch über die Gesichtserkennung und die Bewegungserkennung beim Verlassen des angemieteten Self-Storage-Abteils 14.

Die Sensoren 8, 16 und Leuchtmittel 10, 17 sind mit einem Server der Self-Storage-Anlage verbunden und alle Daten und elektrischen Verbindungen werden über die Anschlüsse 6 am Sensorgehäuse 1 übermittelt und zur Verfügung gestellt. Selbstverständlich kann dieser Server "on-site" sein oder außerhalb der Self-Storage-Anlage vorgesehen sein bzw. in einer sogenannten Cloud installiert sein.

Diese Anschlüsse 6 liegen im Abdeckungsbereich der Begrenzungswand 7 des Self-Storage-Abteils 14. Damit ist gemeint, dass diese Anschlüsse 6 nach der Montage des Sensorgehäuses 1 nicht mehr frei zugänglich sind, um Manipulationen durch zum Beispiel Kunden in der Self-Storage-Anlage auszuschließen.

In weiteren Ausführungsformen, die zeichnerisch nicht dargestellt sind, kann das Sensorgehäuse andere geometrische Grundformen aufweisen, die von den beispielhaft beschriebenen quaderförmigen Grundformen abweichen, solange die technischen Wirkungen und Vorteile erreicht werden, die oben beschrieben sind.

Schließlich lassen sich über das erfindungsgemäße Sensorgehäuse 1 auch externe Geräte ansteuern, die räumlich vom Sensorgehäuse 1 getrennt am Self-Storage-Abteil 14 angebracht sind. Denkbar wäre hier die Ansteuerung des elektronischen Schlosses in der Tür des Self-Storage-Abteils 14 zur Entriegelung und Verriegelung oder die Ansteuerung eines Displays an der Begrenzungswand 7 des Self-Storage-Abteils 14, um Informationen dort anzuzeigen. Die Verbindung zwischen dem Sensorgehäuse 1 und dem externen Gerät erfolgt dabei entweder kabelgebunden oder über eine drahtlose Verbindung wie WIFI oder Bluetooth.

Vorgeschlagen wird demnach ein Sensorgehäuse 1 für die Montage in einer Begrenzungswand 7 eines Self-Storageabteils 14 bzw. einer Self-Storage-Box von ausserhalb bzw. gangseitig 15 des Self-Storageabteils 14 bzw. der Self-Storage-Box, wobei das Gehäuse 1 im Wesentlichen zweiteilig ausgebildet ist, und wobei die beiden

Gehäuseteile 2, 3 scharnierartig mit- und zueinander verschwenkbar verbunden sind, mit einem Flansch 4, der am Gehäuseteil 2 gangseitig 15 vorgesehen ist, wobei am Flansch 4 im umlaufenden Rand mehrere Montageöffnungen 5 vorgesehen sind, mit einer Mehrzahl von elektrischen Anschlüssen 6, die im äußeren Gehäuseteil 2 derart angeordnet sind, dass diese im Abdeckungsbereich der Begrenzungswand 7 des Self-Storage-Abteils bzw. der Self-Storage-Box nach der Montage liegen, mit zumindest einem Sensor 8 und/oder zumindest einem Leuchtmittel 10, die am abteilseitigen bzw. boxseitigen Gehäuseteil 3 angeordnet ist/sind und mit zumindest einem Sensor 16 und/oder zumindest einem Leuchtmittel 17, die am gangseitigen Gehäuseteil 2 angeordnet ist/sind.

Hinsichtlich vorstehend im einzelnen nicht näher erläuterter Merkmale der Erfindung wird in übrigen ausdrücklich auf die Ansprüche und die Zeichnungen verwiesen.

### Bezugszeichenliste:

- 1: Sensor-Gehäuse
- 2: Gehäuseteil (gangseitig)
- 3: Gehäuseteil (abteilseitig)
- 4: Flansch
- 5: Montageöffnung
- 6: Anschlüsse (elektrisch)
- 7: Begrenzungswand
- 8: Sensor(en)
- 9: Lüftungsschlitze
- 10: Leuchtmittel bzw. LED(s)
- 11: Scharnier(e)
- 12: Deckel Gehäuseteil 2
- 13: Deckel Gehäuseteil 3
- 14: Self-Storage-Abteil bzw. Self-Storage-Box
- 15: Gang
- 16: Sensor(en)
- 17: Leuchtmittel
- 18: Schraube(n)
- 19: Flachbandkabel
- 20: Lüftungsöffnungen

- α: Schwenkwinkel
- A: Schwenkachse

## Patentansprüche

1. Sensorgehäuse (1) für die Montage in einer Begrenzungswand (7) eines Self-Storageabteils (14) bzw. einer Self-Storage-Box von außerhalb bzw. gangseitig (15) des Self-Storageabteils (14) bzw. der Self-Storage-Box, mit:
- dem Gehäuse (1), welches im Wesentlichen zweiteilig ausgebildet ist, wobei die beiden Gehäuseteile (2, 3) scharnierartig mit- und zueinander verschwenkbar (α) verbunden sind;
- einem Flansch (4), der am gangseitigen Gehäuseteil (2) vorgesehen ist, wobei am Flansch im umlaufenden Rand mehrere Montageöffnungen (5) vorgesehen sind;
- einer Mehrzahl von elektrischen Anschlüssen (6), die im gangseitigen Gehäuseteil (2) derart angeordnet sind, dass diese im Abdeckungsbereich der Begrenzungswand (7) nach der Montage liegen;
- zumindest einem Sensor (8) und/oder zumindest einem Leuchtmittel (10), die am abteilseitigen bzw. boxseitigen Gehäuseteil (3) angeordnet ist/sind und mit zumindest einem Sensor (16) und/oder zumindest einem Leuchtmittel (17), die am gangseitigen Gehäuseteil (2) angeordnet ist/sind.

2. Sensorgehäuse (1) nach Anspruch 1, wobei zwischen den beiden Gehäuseteilen (2, 3) ein Scharnier (11) derart vorgesehen ist, dass die beiden Gehäuseteile (2, 3) in festgelegten Winkelschritten um eine Achse (A) zueinander verschwenkbar sind und das Scharnier (11) selbstarretierend ist.

3. Sensorgehäuse (1) nach Anspruch 1 oder 2, wobei zwischen den beiden Gehäuseteilen (2, 3) eine elektrische Verbindung vorgesehen ist, die in Form eines Flachbandkabels (19) ausgebildet ist.

4. Sensorgehäuse (1) nach einem der vorhergehenden Ansprüche, wobei an beiden Gehäuseteilen (2, 3) eine Mehrzahl von Lüftungsschlitzen (9) bzw. Lüftungsöffnungen (20) vorgesehen ist.

5. Sensorgehäuse (1) nach einem der vorhergehenden Ansprüche, wobei zumindest ein Sensor (8, 16) in Form einer Videokamera ausgebildet ist.

6. Sensorgehäuse (1) nach einem der vorhergehenden Ansprüche, wobei zumindest ein Sensor (8, 16) in Form eines Mikrofones ausgebildet ist.

7. Sensorgehäuse (1) nach einem der vorhergehenden Ansprüche, wobei zumindest ein Sensor (8, 16) in Form eines Temperaturmessers ausgebildet ist.

8. Sensorgehäuse (1) nach einem der vorhergehenden Ansprüche, wobei zumindest ein Sensor (8, 16) in Form eines Gasdetektors ausgebildet ist.

9. Sensorgehäuse (1) nach einem der vorhergehenden Ansprüche, wobei zumindest ein Leuchtmittel (10, 17) in Form von LEDs ausgebildet ist.

10. Sensorgehäuse (1) nach einem der vorhergehenden Ansprüche, wobei das Gehäuse (1) und/oder die Gehäuseteile (2, 3) im Wesentlichen quaderförmig ausgebildet sind.

11. Sensorgehäuse (1) nach einem der vorhergehenden Ansprüche, wobei die beiden Gehäuseteile (2, 3) jeweils einen Deckel (12, 13) aufweisen, der mit einem Grundkörper des Gehäuseteils (2, 3) verschraubt ist.

12. Sensorgehäuse (1) nach einem der vorhergehenden Ansprüche, wobei der Schwenkwinkel (α) je nach Größe des Self-Storage-Abteils (14) bzw. der Self-Storage-Box einstellbar ist.

13. Sensorgehäuse (1) nach einem der vorhergehenden Ansprüche, wobei das Gehäuse (1) mittels Schrauben (18) an der Begrenzungswand (7) nach der Montage festgeschraubt ist.

14. Sensorgehäuse (1) nach einem der vorhergehenden Ansprüche, wobei im Gehäuse (1) zumindest ein Lautsprecher vorgesehen ist.

15. Sensorgehäuse (1) nach einem der vorhergehenden Ansprüche, wobei zumindest ein Sensor (8, 16) in Form eines Luftfeuchtemessers ausgebildet ist.

## Claims

1. A sensor housing (1) for mounting in a partition wall (7) of a self-storage unit (14) or a self-storage box from outside or on the corridor side (15) of the self-storage unit (14) or self-storage box, comprising:
- the housing (1), which is substantially formed in two parts, wherein the two housing parts (2, 3) are pivotally (α) interconnected in the manner of a hinge;
- a flange (4), which is provided on the corridor-side housing part (2), wherein a plurality of mounting openings (5) are provided on the flange in the peripheral edge;
- a plurality of electrical connections (6), which are arranged in the corridor-side housing part (2) such that they are positioned in the covered region of the partition wall (7) after being mounted;
- at least one sensor (8) and/or at least one lighting means (10) which is/are arranged on the unit-side or box-side housing part (3), and comprising at least one sensor (16) and/or at least one lighting means (17) which is/are arranged on the corridor-side housing part (2).

2. The sensor housing (1) according to claim 1, wherein a hinge (11) is provided between the two housing parts (2, 3) such that the two housing parts (2, 3) are pivotable relative to one another about an axis (A) in set angular increments and the hinge (11) is self-locking.

3. The sensor housing (1) according to claim 1 or 2, wherein an electrical connection, which is in the form of a ribbon cable (19), is provided between the two housing parts (2, 3).

4. The sensor housing (1) according to any of the preceding claims, wherein a plurality of ventilation slots (9) or ventilation openings (20) are provided on both housing parts (2, 3).

5. The sensor housing (1) according to any of the preceding claims, wherein at least one sensor (8, 16) is in the form of a video camera.

6. The sensor housing (1) according to any of the preceding claims, wherein at least one sensor (8, 16) is in the form of a microphone.

7. The sensor housing (1) according to any of the preceding claims, wherein at least one sensor (8, 16) is in the form of a thermometer.

8. The sensor housing (1) according to any of the preceding claims, wherein at least one sensor (8, 16) is in the form of a gas detector.

9. The sensor housing (1) according to any of the preceding claims, wherein at least one lighting means (10, 17) is in the form of LEDs.

10. The sensor housing (1) according to any of the preceding claims, wherein the housing (1) and/or the housing parts (2, 3) are substantially cuboid in shape.

11. The sensor housing (1) according to any of the preceding claims, wherein the two housing parts (2, 3) each comprise a cover (12, 13), which is screwed to the main body of the housing part (2, 3).

12. The sensor housing (1) according to any of the preceding claims, wherein the pivot angle (α) can be set depending on the size of the self-storage unit (14) or self-storage box.

13. The sensor housing (1) according to any of the preceding claims, wherein the housing (1) is securely screwed to the partition wall (7) by means of screws (18) after being mounted.

14. The sensor housing (1) according to any of the preceding claims, wherein at least one speaker is provided in the housing (1).

15. The sensor housing (1) according to any of the preceding claims, wherein at least one sensor (8, 16) is in the form of a hygrometer.

## Revendications

1. - Boîtier de capteur (1) pour le montage dans une paroi de délimitation (7) d'un compartiment de self-stockage (14) ou d'une box de self-stockage de l'extérieur ou du côté couloir (15) du compartiment de self-stockage (14) ou de la box de self-stockage, avec :
- le boîtier (1), lequel est réalisé essentiellement en deux parties, les deux parties de boîtier (2, 3) étant reliées l'une à l'autre par charnière et étant aptes à pivoter l'une par rapport à l'autre (α) ;
- une bride (4) qui est prévue sur la partie de boîtier côté couloir (2), plusieurs ouvertures de montage (5) étant prévues sur la bride dans le bord périphérique ;
- une pluralité de connexions électriques (6) qui sont disposées dans la partie de boîtier (2) côté couloir de telle sorte que celles-ci se trouvent dans la zone de recouvrement de la paroi de délimitation (7) après le montage ;
- au moins un capteur (8) et/ou au moins une source lumineuse (10) qui est/sont disposés sur la partie de boîtier (3) côté compartiment ou côté box et avec au moins un capteur (16) et/ou au moins une source lumineuse (17) qui est/sont disposés sur la partie de boîtier (2) côté couloir.

2. - Boîtier de capteur (1) selon la revendication 1, dans lequel une charnière (11) est prévue entre les deux parties de boîtier (2, 3) de telle sorte que les deux parties de boîtier (2, 3) sont aptes à pivoter l'une par rapport à l'autre autour d'un axe (A) par incréments angulaires définis et que la charnière (11) est autobloquante.

3. - Boîtier de capteur (1) selon l'une des revendications 1 ou 2, dans lequel une liaison électrique est prévue entre les deux parties de boîtier (2, 3), laquelle est réalisée sous la forme d'un câble plat (19).

4. - Boîtier de capteur (1) selon l'une des revendications précédentes, dans lequel plusieurs fentes d'aération (9) ou ouvertures d'aération (20) sont prévues sur les deux parties de boîtier (2, 3).

5. - Boîtier de capteur (1) selon l'une des revendications précédentes, dans lequel au moins un capteur (8, 16) est réalisé sous la forme d'une caméra vidéo.

6. - Boîtier de capteur (1) selon l'une des revendications précédentes, dans lequel au moins un capteur (8, 16) est réalisé sous la forme d'un microphone.

7. - Boîtier de capteur (1) selon l'une des revendications précédentes, dans lequel au moins un capteur (8, 16) est réalisé sous la forme d'un indicateur de température.

8. - Boîtier de capteur (1) selon l'une des revendications précédentes, dans lequel au moins un capteur (8, 16) est réalisé sous la forme d'un détecteur de gaz.

9. - Boîtier de capteur (1) selon l'une des revendications précédentes, dans lequel au moins une source lumineuse (10, 17) est réalisée sous la forme de diodes électroluminescentes (DEL).

10. - Boîtier de capteur (1) selon l'une des revendications précédentes, dans lequel le boîtier (1) et/ou les parties de boîtier (2, 3) sont réalisés de forme sensiblement parallélépipédique.

11. - Boîtier de capteur (1) selon l'une des revendications précédentes, dans lequel les deux parties de boîtier (2, 3) présentent chacune un couvercle (12, 13) qui est vissé à un corps de base de la partie de boîtier (2, 3).

12. - Boîtier de capteur (1) selon l'une des revendications précédentes, dans lequel l'angle de pivotement (α) est réglable en fonction de la taille du compartiment de self-stockage (14) ou de la box de self-stockage.

13. - Boîtier de capteur (1) selon l'une des revendications précédentes, dans lequel le boîtier (1) est vissé à la paroi de délimitation (7) au moyen de vis (18) après le montage.

14. - Boîtier de capteur (1) selon l'une des revendications précédentes, dans lequel au moins un haut-parleur est prévu dans le boîtier (1).

15. - Boîtier de capteur (1) selon l'une des revendications précédentes, dans lequel au moins un capteur (8, 16) est réalisé sous la forme d'un hygromètre.
